# EUROPEAN PATENT APPLICATION

(11) **EP 1 065 834 A1**
(43) Date of publication of application: **03.01.2001**
(21) Application number: 99305184.6
(22) Date of filing: 30.06.1999
(51) Int. Cl.: H04L 12/42, H04L 12/56

(54) **Hierarchical ring topology using GMII level signalling**

(71) Applicant: Texas Instruments Incorporated, Dallas, Texas 75251 (US); TEXAS INSTRUMENTS LIMITED, Northampton NN4 7ZE (GB)
(72) Inventor: Szczepanek, Andre, Hartwell, Northants. NN7 2HT (GB); Robertson, Iain, Cople, Bedford (GB); Rowell, Anthony, Irchester, Northants. NN29 7ED (GB); Beaudoin, Denis R., Rowlett, Texas (US)
(74) Representative: Holt, Michael

(57) **Abstract**

The present invention is a switching device (100) operable in a ring mode to interconnect and interoperate with at least one other switching device through a collision pin (112) and a flow pin (114). The exemplary switching device (100) includes local ports (102) and external memory (104).

## Description

### TECHNICAL FIELD OF THE INVENTION

This invention relates generally to data communications and more particularly to a method, system and apparatus for communicating data over shared media access.

### BACKGROUND OF THE INVENTION

A switch is a device that connects multiple LANs or LAN segments and filters, i.e., examining the packet to determine its destination, in accordance with the networking protocol and forwards packets between them. Ethernet is a popular networking protocol defined by IEEE 802.3x standards. In an Ethernet network, the packets of information are referred to as frames. While a single switching device is useful in many situations, combining multiple switches provides greater flexibility and capacity as the network grows. Thus, faster, more efficient ways of combining multiple switches is desirable.

### SUMMARY OF THE INVENTION

The present invention is a switching device (100) operable in a ring mode to interconnect and interoperate with at least one other switching device through a collision pin (112) and a flow pin (114).

These and other features of the invention that will be apparent to those skilled in the art from the following detailed description of the invention, taken together with the accompanying drawings.

### DESCRIPTION OF THE DRAWINGS

Fig. 1 shows a block diagram of an exemplary switching device operable to be configured with at least one other switching device in a ring mode in accordance with the present invention; and
Fig. 2 is a block diagram of four switching devices configured and interconnected together in a ring mode in accordance with the present invention.

### DETAILED DESCRIPTION OF THE INVENTION

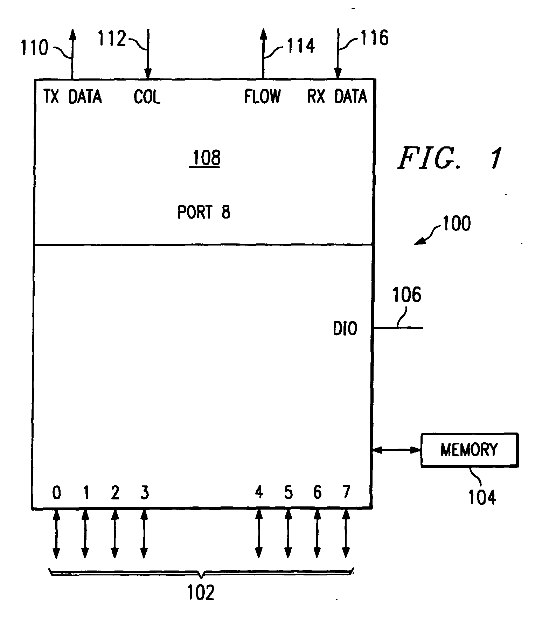

Fig. 1 shows an exemplary switching device 100 which is configurable in a ring mode with at least one other switching device in accordance with the present invention. The switching device 100 can be implemented using the TNETX4090 ThunderSWITCH II, and/or the TNETX4020, both products of the assignee Texas Instruments Incorporated. The TNETX4090 fully integrates a high-performance switching engine with an internal address lockup engine, network management extensions, and 9 Ethernet media access controllers (MAC) on a single piece of silicon. The TNETX4020 includes a similar switching engine with the same look-up engine and network management extensions but with 2 100-/1000-MB ports on single piece of silicon. To ease the interface to fiber, a PCS function is also integrated on each port.

As shown in Fig. 1, the exemplary switching device 100 includes 8 100 megabit (MB) local ports 102, a gigabit port 108, an external memory 104, and a DIO port 106. The gigabit port 108 includes a TXDATA output pin 110, a collision input pin 112, a flow output pin 114, and an RXDATA input pin 116. Operation of each is discussed in more detail hereinbelow.

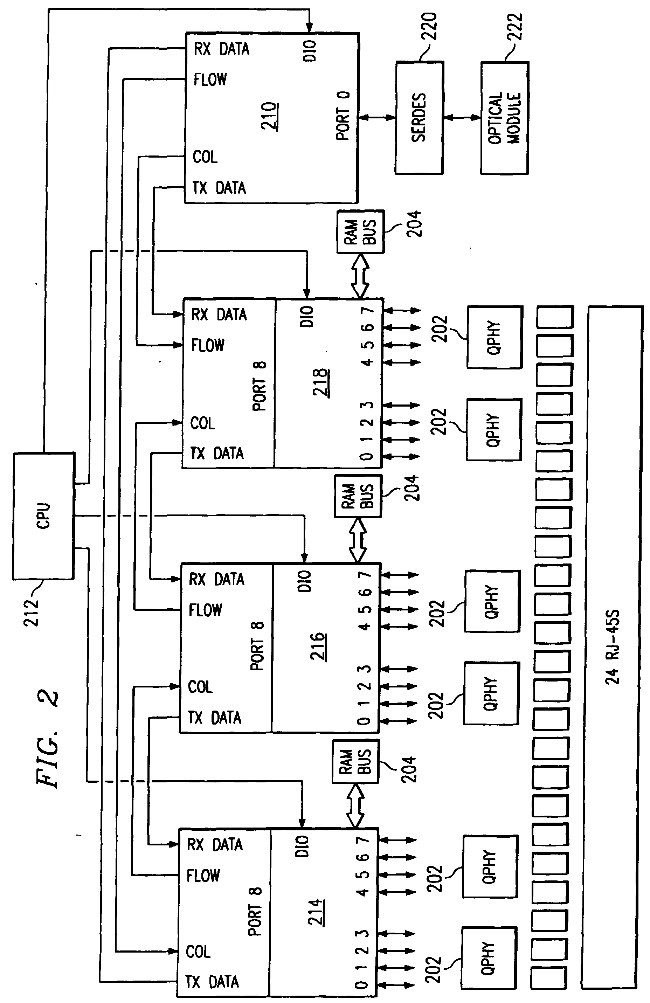

The ring mode of the exemplary switching device 100 is designed to allow multiple devices to work together to create a higher port density solution. For example, Fig. 2 shows three TNETX4090 devices 100 and one TNETX4020 device 210 cascaded in ring mode through their gigabit ports 108 to create a 24-port 10-/100-Mbps switch with a gigabit uplink. To cascade the three TNETX4090 devices 100 and the TNETX4020 device 210 together in ring mode, Fig. 2 shows the flow pins 114 of the switching devices 214, 216, and 218 are connected to the collision pins 112 of the switching devices 216, 218, and 210, respectively. The flow pin 114 of the switching device 210 is connected to the collision pin 112 of the switching device 214. The RXDATA pins 116 of the switching devices 214, 216, and 218 are connected to the TXDATA pins 110 of the switching devices 216, 218, and 210, respectively. The RXDATA pin 116 of the switching device 210 is connected to the TXDATA pin 110 of the switching device 214. The DIO pin 106 of each of the switching devices 214, 216, 218, and 210 is connected to the CPU 212.

With a CPU 212 connection, SNMP, Spanning Tree, and VLAN support across the entire platform along with the collection of remote monitoring (RMON), SNMP, and Ethernet statistics are also included. Fig. 2 also shows the 24 ports of the cascaded devices 100 connected to 24 RJ-45 connections through QPHYs 202. Each external memory 104 portion of the exemplary switching device 100 is implemented in Fig. 2 using RAMBUS RDRAMs 204. And, in addition, Port 0 of the switching device 210 is bi-directionally connected to SERDES device 220 which is bi-directionally connected to optical module 222.

Fig. 2 thus illustrates how four switching devices 214, 216, 218 and 210 can be configured together in ring mode to provide a single 24-port switching device 200 with uplink, managed-switch configuration. No glue logic is needed to build the managed switch 200.

The following scenarios explain in more detail how the ring mode in accordance with the present invention operates.

### First Scenario

The first scenario illustrates what happens to a packet when it comes in on a local port in switching device 214 and is addressed for local port 7 on switching device 216. This scenario assumes that the destination address has been learned on all of the devices 214, 216, 218, and 210.

First, check Destination Address (DA) to see if it belongs to the switching device 214. The destination address is attached to Port 8, the gigabit port 108, of the switching device 214. Generate a pretag in the local ring ID and forward to Port 8, the gigabit port 108, of the switching device 214.

Second, to start transmitting from Port 8, the gigabit port 108, on the switching device 214, the collision pin 112 on the switching device 214 must be set to zero before it will start transmitting packets to Port 8, the gigabit port 108, on the switching device 216.

Third, transmit, the packet to Port 8, the gigabit port 108, on the switching device 216.

Fourth, after the packet is received by Port 8, the gigabit port 108, of the switching device 216, the switching device 216 checks the ring ID in the packet pretag to make sure it does not match the local device ring ID. Then the switching device 216 checks the DA to see which of its local ports 102 the packet goes to. In this case, the packet is destined for local port 7. The switching device 216 then removes the ring ID and queues the packet on the local port 7 transmit queue.

### Second Scenario

The second scenario illustrates what happens to a packet when it comes in on a port in the switching device 214 and is addressed for local port 5 on the switching device 218. This scenario assumes that the destination address has been learned on all of the switching devices 214, 216, 218, and 210. This scenario also points out that in the Ring Mode a packet can be received and transmitted from Port 8, the gigabit port 108.

First, check Destination Address (DA) to see if it belongs to the switching device 214. The destination address is attached to Port 8, the gigabit port 108 of the switching device 214. Generate a pretag in the local ring ID and forward the packet to Port 8, the gigabit port 108.

Second, to start transmitting from Port 8, the gigabit port 108, on the switching device 214, the collision pin 112 of the switching device 214 must be set to zero before it will start transmitting packets to Port 8, the gigabit port 108, on the switching device 216.

Third, transmit the packet to Port 8, the gigabit port 108, on the switching device 216.

Fourth, after the packet is received by on Port 8, the gigabit port 108, of the switching device 216, the switching device 216 checks the ring ID in the packet pretag to make sure it does not match its ring ID. Then the switching device 216 checks the DA to see which local port 102 the packet goes to. In this case, the packet is not destined for any local port 102 on the switching device 217; the address is registered to Port 8, the gigabit port 108, of the switching device 216. Add the packet to the transmit queue for Port 8, the gigabit port 108, on the switching device 216.

Fifth, to start transmitting from Port 8, the gigabit port 108, on the switching device 216, the collision pin 112 on the switching device 216 must be set to zero before it will start transmitting packets to Port 8, the gigabit port 108, on the switching device 218.

Sixth, transmit the packet to Port 8, the gigabit port 108, on the switching device 218.

Seventh, after the packet is received on Port 8, the gigabit port 108, of the switching device 218, the switching device 218 checks the ring ID to make sure it does not match its ring ID. Then the switching device 218 checks the DA to see which port the packet goes to. In this case, the packet is destined for port 5. The switching device 218 removes the ring ID and then queues the packet on the local port 5 transmit queue.

### Third Scenario

The third scenario illustrates what happens to a packet when it comes in on a local port 102 on the switching device 216 and goes to a station registered on the uplink of the switching device 210. This scenario assumes that the destination address has been learned on the switching device 210.

First, check Destination Address (DA) to see if it belongs to the switching device 216. The destination address is attached to Port 8, the gigabit port 108 of the switching device 216. Generate a pretag with the local ring ID and forward to Port 8, the gigabit port 108 of the switching device 216.

Second, to start transmitting from Port 8, the gigabit port 108, on the switching device 216, the collision pin 112 of the switching device 216 must be set to zero before the switching device 216 will start transmitting packets to Port 8, the gigabit port 108, on the switching device 218.

Third, transmit the packet to Port 8, the gigabit port 108, on the switching device 218.

Fourth, after the packet is received by Port 8, the gigabit port 108, of the switching device 218, the switching device 218 checks the ring ID in the packet pretag to make sure it does not match the local devices ring ID. Then the switching device 218 checks the DA to see which local port 102 the packet goes to. In this case, the packet is not destined for any local port 102 on the switching device 218; the address is registered on Port 8, the gigabit port 108. Add the packet to the transmit queue for Port 8, the gigabit port, on the switching device 218.

Fifth, to start transmitting from Port 8, the gigabit port 108, on the switching device 218, the collision pin 112 must be set to zero before the switching device 218 will start transmitting packets to Port 1, the ringed port, on the switching device 210.

Sixth, transmit the packet to Port 1, the ringed port, on the switching device 210.

Seventh, after the packet is received by Port 1, the ringed port, on the switching device 210, the switching device 210 checks the ring ID to make sure it does not match the ring ID of the switching device 210. Then the switching device 210 checks the DA and finds that the packet needs to be forwarded to Port 0, the uplink port of the switching device 210. The switching device 210 removes the ring ID pretag and then queues the packet on the Port 0, the uplink port, transmit queue.

### Fourth Scenario

The fourth scenario illustrates what happens to a packet when it comes in on a local port 102 in the switching device 214 and the address is not known on any of the ringed devices 214, 216, 218, or 210. This scenario also shows that a packet does not stay in the ring forever.

First, check Destination Address (DA) to see if it belongs to the switching device 214. It does not; therefore, add the ring ID and forward the packet to Port 8, the gigabit port 108, on the switching device 214.

Second, to start transmitting from Port 8, the gigabit port 108, on the switching device 214, the collision pin 112 must be set to zero before the switching device 214 will start transmitting packets to Port 8, the gigabit port 108, on the switching device 216.

Third, transmit the packet to Port 8, the gigabit port 108, on the switching device 216.

Fourth, after the packet is received by Port 8, the gigabit port 108, on the switching device 216, the switching device 216 checks the ring ID to make sure the packet does not match its ring ID. Then the switching device 216 checks the DA to see which local port 102 the packet goes to. In this case, the packet is not destined for any local port 102 on the switching device 216. Therefore, learn the Source Address first, then add the packet to the transmit queue for Port 8, the gigabit port 108, on the switching device 216.

Fifth, to start transmitting from Port 8, the gigabit port 108, on the switching device 216, the collision pin 112 on the switching device 216 must be set to zero before the switching device 216 will start transmitting packets to Port 8, the gigabit port 108, on the switching device 218.

Sixth, transmit the packet to Port 8, the gigabit port 108, on the switching device 218.

Seventh, after the packet is received on Port 8, the gigabit port 108, of the switching device 218, the switching device 218 checks the ring ID to make sure it does not match its ring ID. Then the switching device 218 checks the DA to see which port the packet goes to. In this case, the packet is destined for any local port 102. Therefore, learn the Source Address first, then add the packet to the transmit queue for Port 8, the gigabit port 108, on the switching device 218.

Eighth, to start transmitting from Port 8, the gigabit port 108, on the switching device 218, the collision pin 112 on the switching device 218 must be set to zero before the switching device 218 will start transmitting packets to Port 1, the ringed port, on the switching device 210.

Ninth, transmit the packet to Port 1, the ringed port, on the switching device 210.

Tenth, after the packet is received on Port 1, the ringed port, on the switching device 210, the switching device 210 checks the ring ID to make sure it does not match its ring ID. Then the switching device 210 checks the DA to see whether the packet should be forwarded to the uplink. In this case, the DA is not known on the uplink port. Therefore, learn the Source Address first, then add the packet to the transmit queue for Port 1, the ringed port, on the switching device 210.

Eleventh, to start transmitting from Port 1, the ringed port, on the switching device 210, the collision pin 112 must be set to zero before the switching device 210 will start transmitting packets to Port 8, the gigabit port 108, on the switching device 214.

Twelvth, transmit the packet to Port 1, the gigabit port 108, on the switching device 214.

Thirteenth, after the packet is received on Port 8, the gigabit port 108, of the switching device 214, the switching device 214 looks at the ring ID. The ring ID on the packet matches the ring ID in the switching device 214; therefore, the switching device 214 filters the packet. This ensures that the packet does not stay in the ring forever.

The four scenarios demonstrate that the way a packet does not stay in the ring is by the ring ID. In addition, there is flow control between each of the switching devices 214, 216, 218, and 210 in the ring. Therefore, if the receiving switching device 214, 216, 218, or 219 has no more buffers to receive the incoming packet, the receiving device will stop the transmitting device until it has more buffers. This function is achieved by connecting the Flow signal 114 from the receiving device to the collision signal 112 on the transmitting device.

### OTHER EMBODIMENTS

Although the present invention and its advantages have been described in detail, it should be understood that various changes, substitutions and alterations can be made herein without departing from the spirit and scope of the invention as defined by the appended claims.

## Claims

1. A switching device with a first port density and having a ring mode for configuring the switching device to interconnect and interoperate with at least one other switching device with a second port density and thereby operate as a single switching device with a port density equal to the first port density added to the second port density.
